# EUROPEAN PATENT SPECIFICATION

(11) **EP 2 399 881 B1**
(45) Date of publication and mention of the grant of the patent: **23.10.2019**
(21) Application number: 11171806.0
(22) Date of filing: 28.06.2011
(51) Int. Cl.: C04B 35/626, C04B 35/628, C04B 35/632, C04B 35/634

(54) **Method for fabricating composite powders**
Verfahren zur Herstellung von Verbundstoffpulver
Procédé de fabrication de poudres composites

(30) Priority: 28.06.2010 US 824736
(43) Date of publication of application: 28.12.2011
(73) Proprietor: United Technologies Corporation, Farmington, CT 06032 (US)
(72) Inventor: Sheedy, Paul, Vernon, CT Connecticut 06066 (US); Schmidt, Wayde R, Pomfret Center, CT Connecticut 06259 (US)
(74) Representative: Dehns

(56) References cited:
- EP-A1- 0 468 066
- EP-A2- 0 771 771
- EP-A2- 0 828 013
- WO-A1-2004/110955
- WO-A1-2010/058223
- WO-A1-2011/141898
- US-A- 4 759 957
- US-A- 5 039 550
- US-A- 5 246 897
- US-A- 5 672 382
- US-A1- 2003 195 122
- US-A1- 2004 007 092
- US-A1- 2004 249 040
- US-A1- 2005 012 233
- US-A1- 2006 198 949
- US-A1- 2007 054 122
- US-A1- 2007 138 706
- US-A1- 2008 168 717
- US-A1- 2009 017 283
- US-A1- 2009 288 820
- US-A1- 2010 008 019
- US-B1- 6 544 917
- STERNITZKE M ET AL: "ALUMINA/SILICON CARBIDE NANOCOMPOSITES BY HYBRID POLYMER/POWDER PROCESSING: MICROSTRUCTURES AND MECHANICAL PROPERTIES", JOURNAL OF THE AMERICAN CERAMIC SOCIETY, BLACKWELL PUBLISHING, MALDEN, MA, US, vol. 81, no. 1, 1 January 1998 (1998-01-01), pages 41-48, XP000728569, ISSN: 0002-7820

## Description

This disclosure relates to methods for making powders for thermal spray deposition or other uses.

Ceramic and metallic materials, such as superalloys, are attractive materials for use in articles that operate under severe environmental conditions. As an example, gas turbine engine components are subjected to high temperatures, corrosive and oxidative conditions, and elevated stress levels. In order to improve the thermal and oxidative stability of these components, various types of coatings have been used to protect the article from the elevated temperature conditions or corrosive/oxidative and stress-producing environments. Likewise, many other types of components or articles may also utilize protective coatings.

Thermal spraying is one technique for depositing protective coatings onto components. As an example, a feedstock of metal powder, alloy powder, or oxide powder with desired properties and specific deposition parameters may be deposited using thermal spraying.

US 2009/0017283 discloses a silicon-carbide porous article comprising silicon carbide particles as an aggregate, metallic silicon and an aggregate derived from organometallic compound particles. EP 0 468 066 discloses a process for the reaction injection moulding of ceramic articles. US4759957 discloses a thermal spray powder made of Nichrome metallic powder and a polymeric resin.

According to the present invention there is provided a method of fabricating a composite powder including forming a plurality of loose particles having discrete regions of a first material and discrete regions of a second material that is different than the first material. The first material is a chemical precursor to a third, different material. The forming includes blending together particles of the first material with particles of the second material, and the composite powder comprises 75 vol.% of a metal powder and 25 vol.% of a chemical precursor, wherein the chemical precursor is a vinyl polysilazane that is convertible to silicon carbonitride ceramic.

Certain preferred embodiments of the present invention will now be described in more detail by way of example only and with reference to the accompanying drawings, in which:
Figure 1 illustrates an example composite powder according to the present invention;
Figure 2 illustrates a reference example composite powder;
Figure 3 illustrates another reference example composite powder;
Figure 4 illustrates another reference example composite powder; and
Figure 5 illustrates another reference example composite powder.

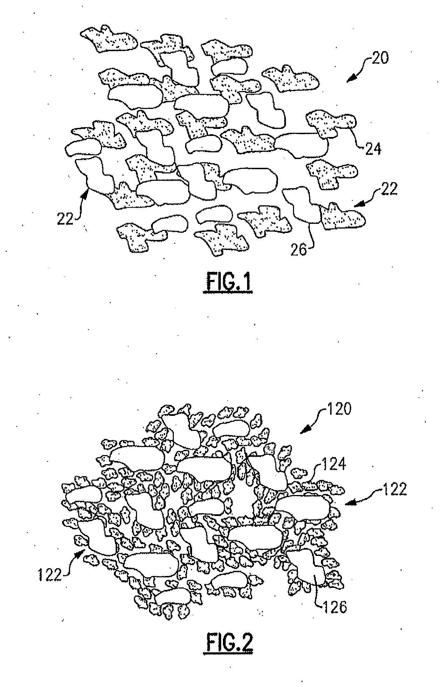

Figure 1 illustrates an example composite powder 20 that may be used in a thermal spraying process to deposit a protective composite coating onto an article or component (i.e., a substrate). Known thermal spray parameters may be adjusted to enable deposition of the composite powder 20. In the illustrated example, the composite powder 20 includes a plurality of loose particles 22 that, together, make up the composite powder 20. The loose particles 22 generally include discrete regions 24 of a first material and discrete regions 26 of a second material. The second material is a metal, and the first material is a chemical precursor, wherein the chemical precursor is a vinyl polysilazane that is convertible to silicon carbonitride ceramic.

In the disclosed examples, the first and second materials are non-sacrificial in that each material is either deposited without chemical transformation to make the protective coating or chemically reacts or converts during deposition or subsequent to deposition to form one or more other materials as the protective coating.

The chemical precursor is a vinyl polysilazane that is convertible to silicon carbonitride ceramic.

The volume percentage of the discrete regions 24 of the first material relative to the combined volume of the discrete regions 24 of the first material and the discrete regions 26 of the second material is 25 vol%. That is, the composite powder 20 comprises 25 vol% of the first material and a remainder of the second material.

The structure of the composite powder 20 is such that the discrete regions 24 of the first material exist as a first set of particles and the discrete regions 26 of the second material exist as a second set of particles that are mixed with the first set of particles. That is, the composite powder 20 is a physical mixture of two different kinds of particles, one being particles of the first material and the other being particles of the second material.

The composite powder 20 is a blend of two different kinds of solid powders in a desired ratio, depending upon the desired composition of the coating that is to be deposited using the composite powder 20. The powders may be blended by mechanical, acoustic or other techniques. The composite powder 20 is a blend of 75 vol% of a metal powder, such as nickel, and 25 vol% of a chemical precursor, namely a vinyl polysilazane that is convertible to silicon carbonitride ceramic (Si-C-N). Particle sizes, size distributions and morphologies of the powders may be selected to achieve desirable mixtures.

The following reference examples disclose additional composite powder structures and fabrication methods. It is to be understood that the disclosed reference examples may utilize the same materials and compositions as described above with regard to the examples of Figure 1. In this disclosure, like reference numerals designate like elements where appropriate and reference numerals with the addition of one-hundred or multiples thereof designate modified elements. The modified elements are understood to incorporate the same features and benefits of the corresponding original elements.

Figure 2 illustrates a reference example composite powder 120. In the illustrated example, the discrete regions 124 of a first material exist as a first set of particles and the discrete regions 126 of the second material exist as a second set of particles that are mixed with the first set of particles. However, unlike the structure in Figure 1, the average particle size of the first set of particles is smaller than the average particle size of the second set of particles. In some examples, the average particle size of the first set of particles and the average particle size of the second set of particles may be represented as a ratio. For instance, the ratio may be between 0.01 and 0.4.

Additionally, at least a portion of the particles of the first set of particles are attached to the second particles as a cladding.

In one example, the smaller particles may be the chemical precursor and the larger particles may be the metal. Alternatively, the larger particles may be the chemical precursor and the smaller particles may be the metal.

Mechanical mixing, such as milling or tumbling, may be used to attach, or clad, the smaller particles to the larger particles. That is, during the mechanical mixing, the particles impact each other and mechanically interlock such that at least some of the particles of the first material attach to the particles of the second material. Additionally, if the smaller particles are the chemical precursor, the chemical precursor can initially be a liquid, semi-solid, or solid material prior to attachment to the larger particles.

One advantage of using a composite powder to fabricate a coating is that liquid or semi-solid chemical precursors can be used and made into composite powders to enable deposition of the coating in greater thicknesses than are available by processing of liquid precursors alone. For instance, the thicknesses available by using liquid precursors are limited by significant volume changes and associated cracking that occur during conversion of the precursor into the ceramic material. However, by incorporating the chemical precursor into a composite powder and using the powder to deposit the coating, it is possible to deposit the coating in greater thicknesses without the same concern for volume changes or cracking.

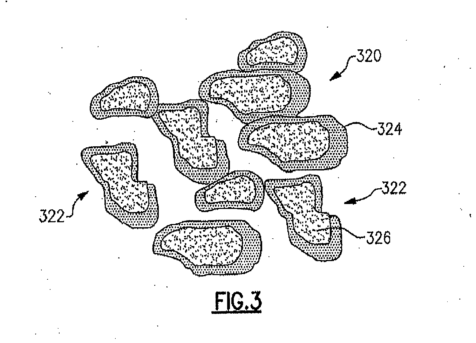

Figure 3 illustrates another reference example composite powder 320. In this case, the structure of the composite powder 320 is such that the discrete regions 326 of the second material exists as particles within the composite powder 320 and the discrete regions 324 of the first material exist as a coating that at least partially surrounds the particles. That is, the particles of the second material may be considered to be particle cores that are surrounded by a coating of the first material. The first material may continuously surround the core particles such that the core particles are substantially or fully encapsulated. In one example, the average thickness of the discrete regions 324 is no greater than one-half of the average diameter of the core particles (discrete regions 326).

The coating may be the chemical precursor and the core particles may be the metal. Alternatively, the core particles may include the chemical precursor and the coating may be the metal.

In one example of depositing the first material as a coating on the core particles, the core particles may be mechanically mixed with the first material to coat the core particles fully or partially. In another example, the first material may be coated onto the core particles by spray drying, vapor deposition, fluidized-bed spray granulation, or other technique.

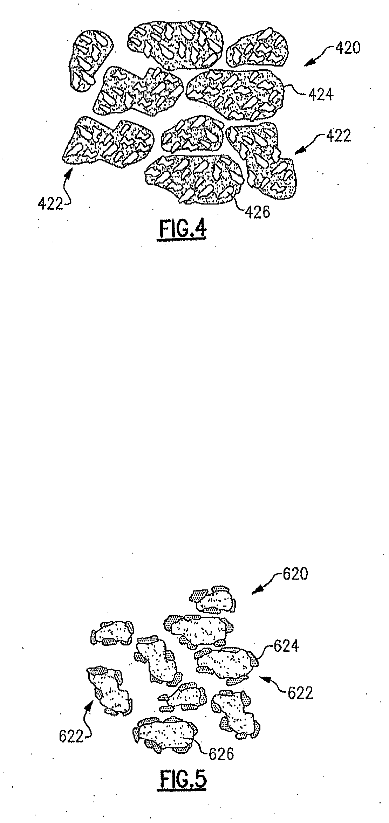

Figure 4 illustrates another reference example composite powder 420 having a structure that is somewhat similar to that shown in the example of Figure 3, except that the coating of the first material binds together multiple particles of the second material 426. As will be described below, the first material functions as a binder or adhesive to bind together multiple core particles of the second material to thereby form agglomerates as the loose particles 422.

In one example, the coating may be the chemical and the core particles may be the metal. Alternatively, the core particles may be the chemical precursor and the coating may be the metal.

Similar to as described above with reference to Figure 3, the first material may be deposited as a coating that binds together the core particles. For instance, the core particles may be mechanically mixed with the first material to coat the core particles fully or partially. Alternatively, the first material may be coated onto the core particles by spray drying, vapor deposition, fluidized-bed spray granulation, or other technique.

In the illustrated example, the first material serves as a binder to form agglomerates that include the particles of the second material. The binder may be used, for instance, to form agglomerates having a desired size for thermal spraying, material handling, or other characteristic. The binder is the chemical precursor.

Figure 5 illustrates another reference example composite powder 620 having a structure such that the discrete regions 626 of the second material exist as particles within the composite powder 620 and the discrete regions 624 of the first material form a discontinuous coating around the particles of the second material 626. That is, the coating does not fully surround the core particles and at least portions of the surfaces of the core particles are exposed.

In one example, the discontinuous coating may be the chemical precursor and the core particles may be the metal. Alternatively, the core particles may be the chemical precursor and the discontinuous coating may be the metal.

The composite powder 620 may be formed using any of the techniques described above with reference to Figures 2-4. In the alternative that the core particles are the chemical precursor and the discontinuous coating is the second material, i.e. the metal, the second material may be deposited onto the core particles using electroless or electrodeposition, deposition of a reducible metal salt, mechanical mixing of fine metal particles, or other techniques.

The preceding description is exemplary rather than limiting in nature. The scope of legal protection given to this disclosure is defined by the following claims.

## Claims

1. A method of fabricating a composite powder (20), comprising:
forming a plurality of loose particles (22) having discrete regions (24) of a first material and discrete regions (26) of a second material that is different than the first material, and at least one of the first material and the second material comprises a chemical precursor to a third, different material,
wherein the forming includes blending together particles of the first material with particles of the second material,
**characterized in that** the composite powder comprises 75 vol.% of a metal powder as the second material and 25 vol. % of a chemical precursor as the first material,
wherein the chemical precursor is a vinyl polysilazane that is convertible to silicon carbonitride ceramic.

2. The method as recited in claim 1, wherein the forming includes:
attaching together discrete regions (24) of a first material and discrete regions (26) of a second material.

3. The method as recited in claim 2, including mechanically mixing particles of the first material with particles of the second material to attach the particles together.

4. The method as recited in claim 1 wherein the metal is nickel.

## Patentansprüche

1. Verfahren zur Herstellung eines Verbundstoffpulvers (20), umfassend:
Bilden einer Vielzahl von losen Partikeln (22), die diskrete Bereiche (24) eines ersten Materials und diskrete Bereiche (26) eines zweiten Materials, das sich von dem ersten Material unterscheidet, aufweisen, und wobei mindestens eines von dem ersten Material und dem zweiten Material einen chemischen Grundstoff von einem dritten, unterschiedlichen Material aufweist,
wobei das Bilden das Zusammenmischen von Partikeln des ersten Materials mit Partikeln des zweiten Materials beinhaltet,
**dadurch gekennzeichnet, dass** das Verbundstoffpulver 75 Vol.-% eines Metallpulvers als das zweite Material und 25 Vol.-% eines chemischen Grundstoffs als das erste Material umfasst,
wobei der chemische Grundstoff ein Vinylpolysilazan ist, das in Silizium-Carbonitrid-Keramik umwandelbar ist.

2. Verfahren nach Anspruch 1, wobei das Bilden Folgendes beinhaltet:
Befestigen von diskreten Bereichen (24) eines ersten Materials und von diskreten Bereichen (26) eines zweiten Materials aneinander.

3. Verfahren nach Anspruch 2, das das mechanische Mischen von Partikeln des ersten Materials mit Partikeln des zweiten Materials umfasst, um die Partikel aneinander zu befestigen.

4. Verfahren nach Anspruch 1, wobei das Metall Nickel ist.

## Revendications

1. Procédé de fabrication d'une poudre composite (20) comprenant :
la formation d'une pluralité de particules libres (22) ayant des régions distinctes (24) d'un premier matériau et des régions distinctes (26) d'un deuxième matériau qui est différent du premier matériau et au moins l'un du premier matériau et du deuxième matériau comprend un précurseur chimique d'un troisième matériau différent,
dans lequel la formation inclut le mélange de particules du premier matériau avec des particules du deuxième matériau,
**caractérisé en ce que** la poudre composite comprend 75 % en volume d'une poudre métallique en tant que deuxième matériau et 25 % en volume d'un précurseur chimique en tant que premier matériau,
dans lequel le précurseur chimique est un vinylpolysilazane qui peut être converti en céramique de carbonitrure de silicium.

2. Procédé selon la revendication 1, dans lequel la formation inclut :
le fait de relier ensemble des régions distinctes (24) d'un premier matériau et des régions distinctes (26) d'un deuxième matériau.

3. Procédé selon la revendication 2, incluant le mélange mécanique de particules du premier matériau avec des particules du deuxième matériau pour relier les particules ensemble.

4. Procédé selon la revendication 1, dans lequel le métal est du nickel.
